# EUROPEAN PATENT APPLICATION

(11) **EP 2 597 610 A1**
(43) Date of publication of application: **29.05.2013**
(21) Application number: 12174000.5
(22) Date of filing: 28.06.2012
(51) Int. Cl.: G06Q 30/02

(54) **Electronic data and/or information management and processing system for market research**

(30) Priority: 25.11.2011 IT PD20110078 U
(71) Applicant: Mix-x Srl, 10015 Ivrea (TO) (IT)
(72) Inventor: Zilich, Rita, 10015 Ivrea (TO) (IT)
(74) Representative: Vinci, Marcello

(57) **Abstract**

It is an electronic system and/or computer processing and management of data for market research, comprising one or more telematic devices fixed and / or movable for loading and managing data in said at least one remote database, where said data include textual information, and single or multiple images; a remote database suited to place said data in appropriate data structures or organized displays or views; means for displaying said data in one or more of these views, where said data can be processed and structured in multiple different views according on requirements.

## Description

INTRODUCTION: The present industrial invention relates to a system and a model designed to carry out emotional market research of a generic and specific type, such as, for example, research focused on vertical markets, such as those of the medical, pharmaceutical, financial, technological, scientific, marketing and sales sectors. DESCRIPTION: The system consists of a series of telematic devices and a model for the acquisition, structuring, processing and display of data gathered from interviews of groups of people, aimed at supporting the comprehension, analysis and synthesis of the mental models adopted by individuals in relation to specific issues, such as for example, physical/psychological diseases, behavioural patterns and styles, approaches and/or attitude toward purchasing goods and services, assessment of the satisfaction quality level in relation to different kinds of products and/or services.

The system consists of a series of networked fixed and/or mobile telematic devices: a local processing device that acquires the data collected, a remote processing device that receives, categorizes, processes and displays the data received according to predetermined rules, enabling downstream interventions with respect to the aforementioned processing, to complete the analysis in the best possible way.

For the analysis process, the system relies on two fundamental elements: a particular structuring technique of the data collected and the subsequent processing and reprocessing, using a relational database with instruments for the analysis, processing, reprocessing and display of the results through specific "views", showing the quantity and quality of the structured data obtained, the ultimate goal of emotional research which is the object of the present invention.

STATE OF THE ART: The traditional research techniques known and used to date typically provide information that does not reflect the actual behaviour of individuals and the reference market. In fact, because of the brain physiology and structure that characterizes humans, they tend to express their opinions in a filtered manner, that is altered and not genuine. Recent neuroscience studies confirm this assumption, especially related to the conformation of the human brain and the different functioning of the right and left lobe. Based on these considerations, a new class of methodological investigations was created aimed at making individuals express their deep emotions in a more natural, spontaneous and unstructured manner. The results thus obtained, precisely because they are spontaneous and unstructured, are difficult to manipulate and exploit for operational purposes (business communication, corporate training, sales force management, etc.). The present invention represents an example of a particularly advanced system, since it overcomes the problem of managing unstructured information, as it reorganizes all data with a particular technique, supported by relational data management systems that facilitate going from so-called "emotional chaos" to operational structuring. CHARACTERISTICS OF THE SYSTEM: The system is based on a mix of expert contributions in neuroscience, behavioural research, sociology, clinical and cognitive psychology, computer science and telematics. In particular, the elicitation phase of this invention was inspired by important discoveries in the field of cognitive neurology (Pinker 1994), according to which thoughts are based on images and language is only a tool used by the individual to communicate these images to the outside world. This means that the content of cognitive structures is also necessarily based on images.

This results in the fact that if an interviewee is encouraged to express ideas and opinions in a non-verbal manner, it will be easier to understand the way the interviewee's thoughts, opinions and beliefs are formed. Thus this system permits an elicitation that does not follow a preordained pattern, but is based on connections and on spontaneous and instinctive mental processes less tied to roots and rational elements.

The result of the elicitation phase of this system is therefore an initial "destructured" verbalization with a large amount of information, to be analyzed and processed, on associations and mental connections of the individual. This material, in order to be fully exploited from an analytical and operational standpoint, that is, to be used for strategies, activities and communication materials, training and marketing, research papers, etc., it needs to be organized and structured which, by rigorously maintaining all mental connections spontaneously expressed by the individual, enables the efficient, practical, effective and above all consistent use. This aspect is addressed by the present invention through the use of certain processing devices that manage a range of data structuring techniques and a series of data reprocessing techniques using a local and remote telematic system and a relational database. The system which is the object of the present invention is therefore based on four essential components:
a) A system of fixed and/or mobile telematic devices, an application and a knowledge database;
b) A specific structuring technique of emotional data in appropriately implemented data structures;
c) A specific technique for the reprocessing of structured data suited to optimize the analysis of data;
d) A specific technique for the management of structured data at a later time, suited to obtain new "views";
e) An interactive and dynamic application based on a knowledge database and specialized views;

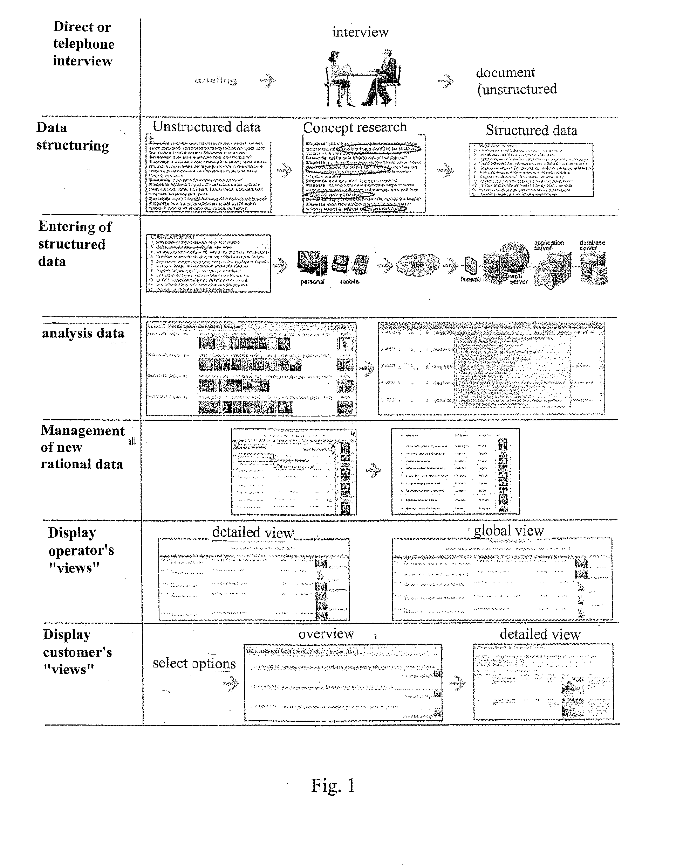

SYSTEM MODEL AND PROCESS (Figure 1): The system consists of fixed and/or mobile telematic devices, firstly suited to load and manage structured data, consisting of textual information and single or multiple images. In this first phase, equipped with a hierarchical user authentication, the system allows the uploading of structured data and images associated with them to a remote relational knowledge database via a LAN and/or the internet. Thus the system enables the modification of the loaded data directly in the context of the knowledge database, and to display the results of these modifications to evaluate their consistency in real time.

Once out of the revision uploading phase, the system can display, for the operators only, some "views" suited to analyze and evaluate the desired values/results in detail. During this phase, and in the case of later phases, it is possible to modify the structured data to optimize the structuring itself and to make the analysis of the results as real and concise as possible. In this phase it is also possible to add new structured and rational data in specific fields, to allow the construction of new associations and new "views" for the schematic presentation of the results.

The remote part of the system, based on an application that uses a relational knowledge database, is responsible for the reception of textual data and images that are loaded and for storing them in special data structures. This system processes, reprocesses and displays the aforementioned data in "views" firstly for the analysis and reprocessing of data by the operators, then for the subsequent processing and display of data in other "view" types, for the analysis, synthesis and presentation of results to the client, which may, if needed, directly access the system via the LAN and/or via the internet: the system allows the access and recognizes the identity of the person accessing the system, according to the permissions originally granted by the operators themselves.

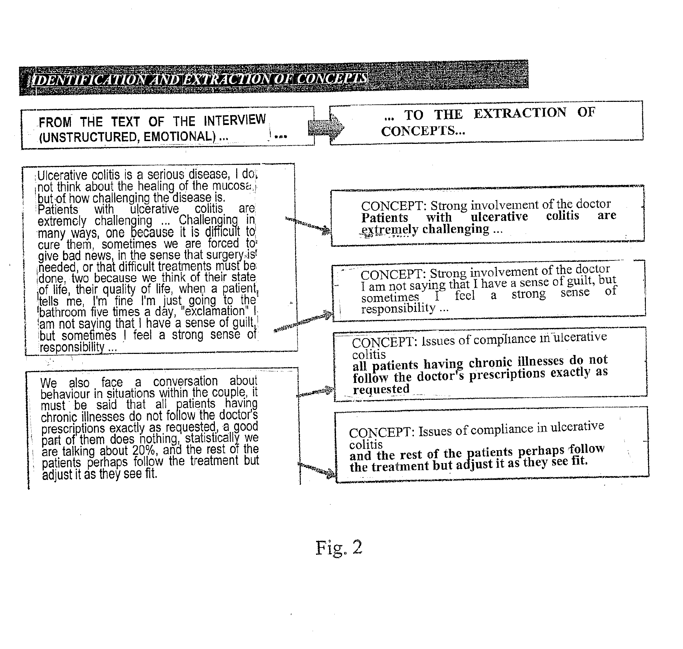

DATA STRUCTURING (Figure 2): During the first phase, the emotional interviews are acquired and transcribed by experienced operators with the described method. In this phase, all data collected through interviews, properly categorized and structured, is formatted to populate the relational knowledge database system, so that it can be reprocessed and displayed in real time, for example via the internet, for the benefit of operators, analysts and the client.

The transcripts of the interviews are then analyzed to extract the concepts with significant value. This phase foresees a preliminary analysis of all contents, that is, of the interviews, aimed at identifying the most relevant "concepts" and to group them.

Each "concept" is then individually isolated, and restructured/enriched with information in order to be subsequently uploaded into the knowledge database system in accordance with the following structure which is provided by way of illustration and is non-limiting:
- Identification of the individual/operator interviewer;
- Identification of the individual/subject interviewed;
- Characteristics of the individual interviewed;
- Identification of the "concept" expressed;
- Brief description of the "concept" expressed;
- Images, drawings, diagrams associated with the concept expressed;
- Main idea of the concept;
- Emotions of the doctor while expressing the specific concept;
- Sentence pronounced by the doctor to express the concept;
- Use of the concept in training activities;
- Use of the concept in communication activities;

This concept restructuring process ensures that the data extracted and isolated from the context of the interview maintains the basic information for its understanding and subsequent contextualization and processing. In the subsequent step, the process also foresees the population of the knowledge database with the structured data necessary to obtain the results and views expected.

The management of the structured data is based on a relational knowledge database, specifically defined for preordained processing according to predetermined semantic rules, a reprocessing of data with real-time feedback and for a subsequent dynamic display of data with "views", that is, the display of views organized with rules of various types.

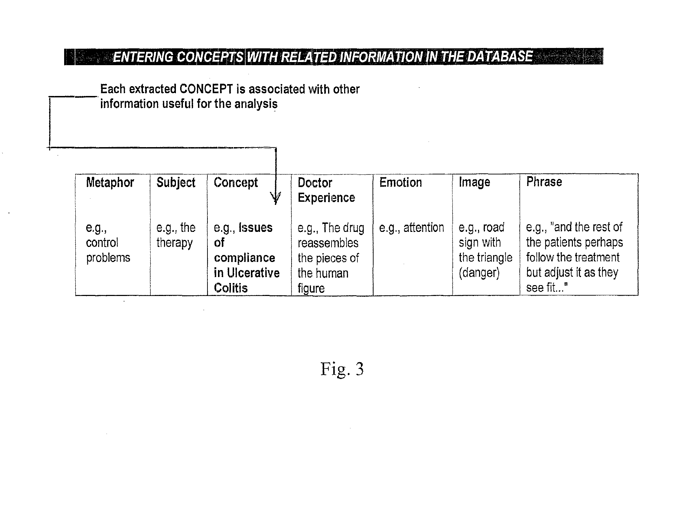

DATA ENTRY (Figure 3): The procedure for loading the knowledge database system involves the following steps:
- entry of structured data associated with each interviewee;
- entry of individual images, associated with each interviewee and relative concept;
- entry of composite images, associated with each interviewee;

The data to be uploaded must comply with the rules established in the structuring process of the data itself, as described in Drawing 2. In particular, the type of data and the sequence of fields/content must comply with the default semantic/syntactic rules of the system.

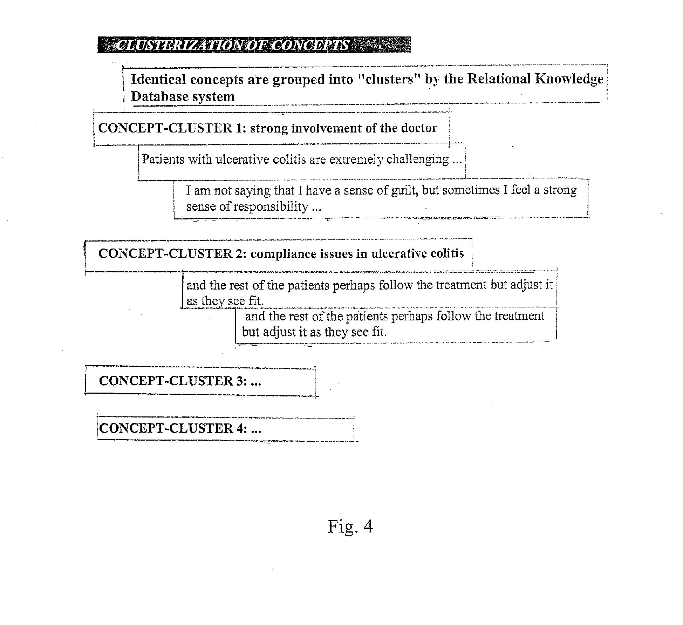

CONCEPT CLUSTERING (Figure 4): Because the interviewees by definition have common characteristics besides those specific, in terms of pathologies, localization, macro-divisions, etc., the system automatically classifies the interviewees in relation to these common data, which may also be more than one, of a hierarchical type or specific/non-hierarchical type. Thus the system can acquire aggregated and categorized data according to the criteria of the aforementioned group(s), therefore it is possible to obtain sorted results, classifications and views both of the aggregate or global type and of the specific type.

The display of "views" of different types also enables the association of each concept with the reference image and/or, if it is the case, a plurality or a composition of images.

The relational knowledge database system is designed to classify and order either "separately" or "subordinately", a series of structured data, typically at least three, in order to calculate the recurrence of this structured data both in absolute and relative terms. The calculation is performed both in relation to recurrences relative to interviewers, interviewees or groups of them. In this way it is possible to carry out an analytical and precise assessment of the phenomenon and to obtain much more accurate results with respect to reality.

Typically, the system processes the data based on enucleated "concepts", however, to get more confirmations, it is possible to process different types of structured data obtained during the interviews and present in specific fields in the database in the same way, for example, the "subject" or the "emotion".

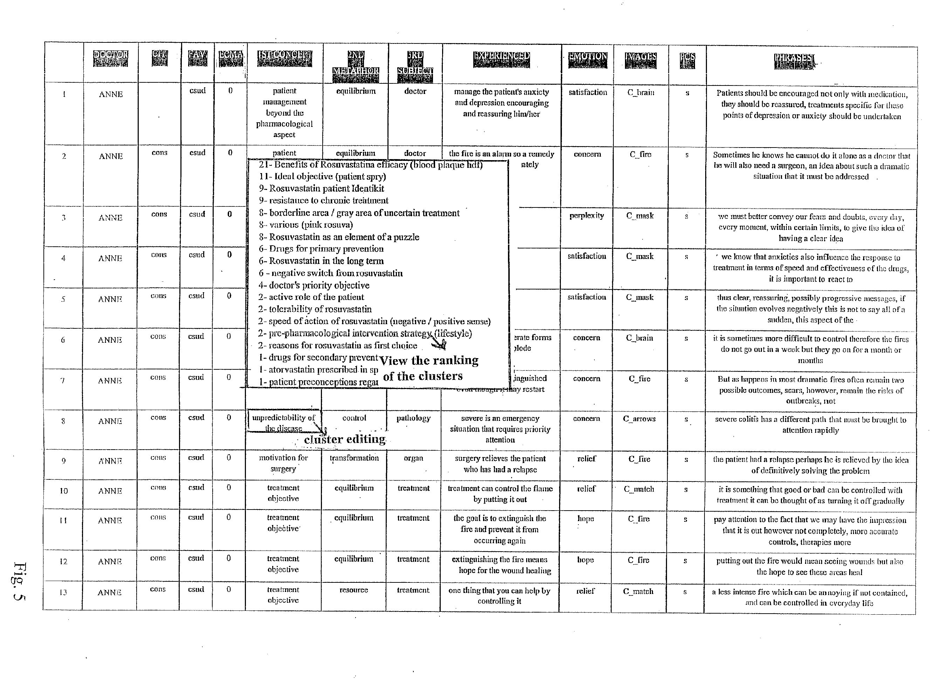

DATA REPROCESSING (Figure 5): The system also enables further modifications and optimizations of all structured data to be made, even and especially after it is uploaded, displaying classifications and recurrences in real-time. In this way it is possible to obtain an immediate confirmation of the semantic and syntactic corrections made without having to re-upload the data. This phase, supported by the system and the relational knowledge database in real time, enables the analysis to be conducted more quickly and the results to be further optimized.

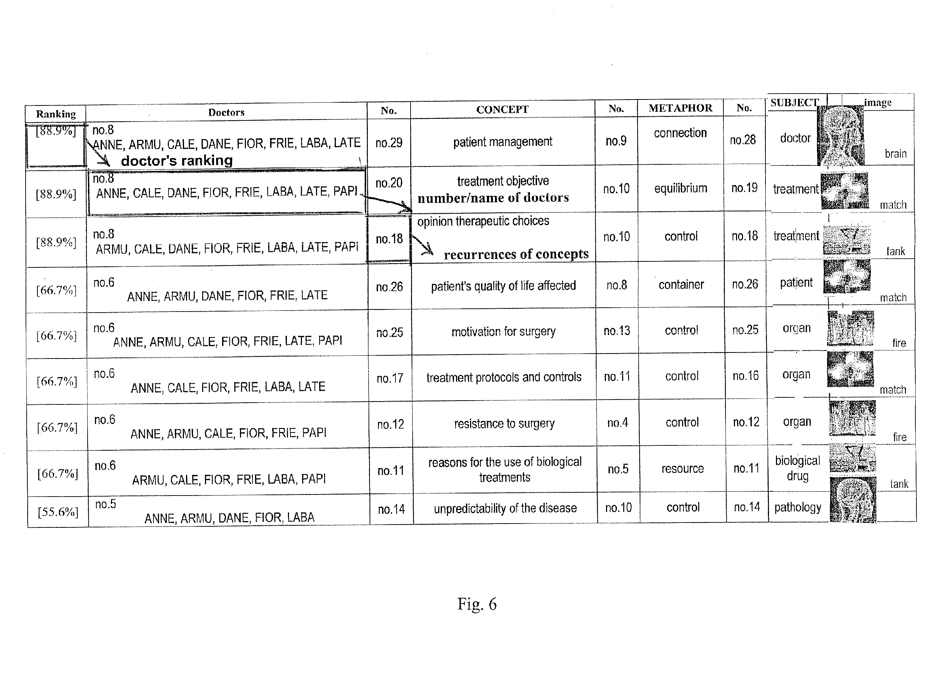

NEW RATIONAL DATA MANAGEMENT (Figure 6): The system and knowledge database are also designed for the entry of evaluation data at a later time carried out on the basis of aggregated selections. In this way it is possible to create special new and automated "views" making use on one hand of the essential features of the system, but that on the other hand allow quick and effective textual and visual diagrams to be obtained which are useful for the analysis and synthesis of the processed data. The value of this data entered at a later time determines and then automatically generates, in a two-dimensional or three dimensional "view", the absolute/relative ranking and position of the data entered.

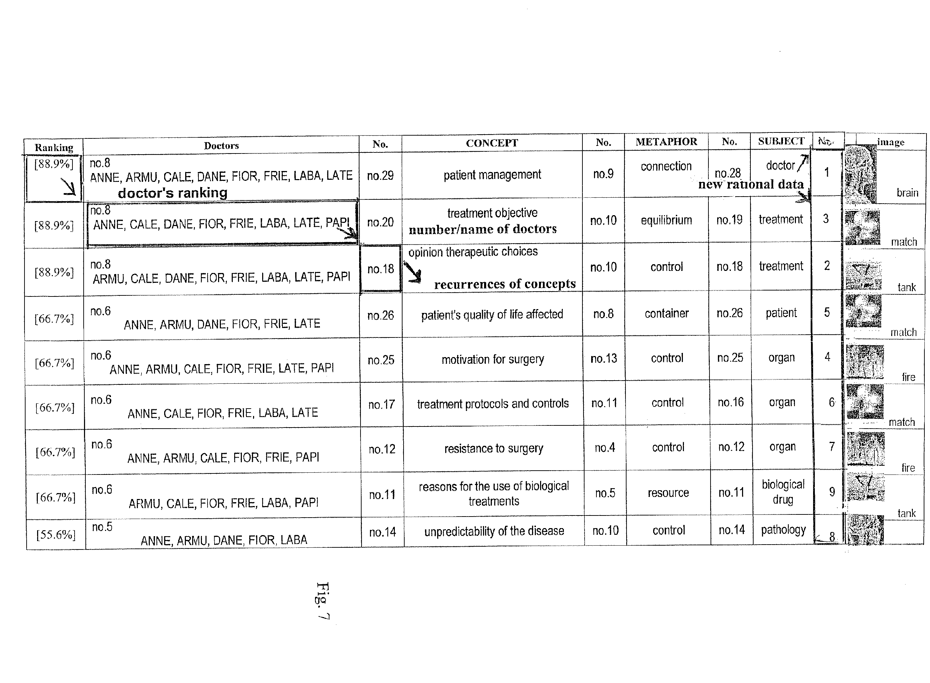

DISPLAY OF THE OPERATOR'S VIEWS (Figure 7): In the analysis, insertion and optimization phase, the system allows the operator to display all data about a specific interview, so it can be modified and supplemented, that is, reprocessed, to obtain analysis results which are as truthful as possible with respect to the "concepts" expressed and explained during the interview itself. This phase is supported by the remote system, through a LAN and/or the internet in real time, so as to immediately evaluate the results of this reprocessing, very useful to reduce the margins of error due for example, to syntax and/or semantic errors, and/or other errors during the data entry stage. During this phase the system reprocesses the data entered at the local level on the remote system, and shows them in real time at the local level. Thus the operator is able to evaluate in real-time the effects of the modifications just made and to structure the data and display the "views" in the best way possible.

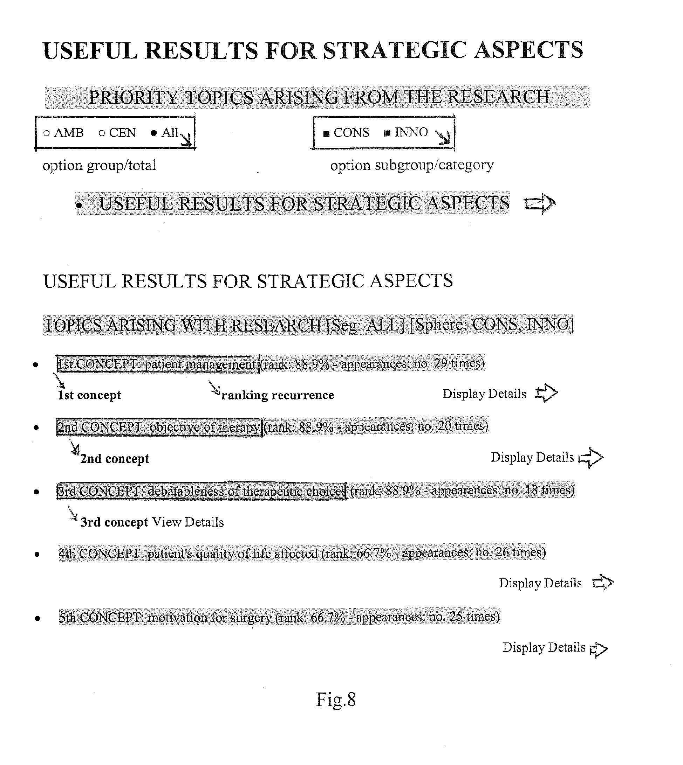

The system displays the "views" of a single sub-group and of all groups, showing the effects of the modifications on a single group or on all the groups considered. With each "concept", the image it refers to is also shown for a better understanding of the phenomenon and to assess the quality and consistency of the data. DISPLAY OF THE CLIENT'S VIEWS (Figure 8): After the phase involving data analysis, synthesis, structuring, optimization, and the final qualitative assessment, the system is ready to supply the specific "views" to the client. After an authentication process, the client can select options in reference to "group/s" or all entries and/or "sub-groups/sub-categories, and then display all the detailed textual, numerical, absolute and relative data as well as the associated images, relating to the emotional research which is the object of the present invention. Notwithstanding these "views", provided by way of non-limiting examples, the system allows the creation and customisation of additional "views" targeted at other aspects of the research.

INTERACTIVE APPLICATION: All functions described heretofore, as well as other ancillary functions, are managed by an interactive dynamic application, which operates through a LAN and/or through the internet, based on a relational knowledge database able to perform at least the following operations:
- Management of a new user (operator, analyst, client)
- Management of data related to the operator
- Management of data related to the interviewee
- Management of all data associated with the interviewee
- Reprocessing of relevant data for analysis purposes
- Management of new rational data in a later time

Firstly, the application permits to define how many and which users are entitled to access the system, as well as the classification of each type of user according to an access or elected hierarchy, the data, a subset of the data itself, some types of "views" in place of other types, only available to operators or clients.

The system is therefore equipped with a selective and hierarchical control of access, management, data entry, modification, deletion, sorting and grouping functions. The control is useful to permit the following operations:
- Uploading of data and images by interviewers and operators;
- Display of preliminary data and results by interviewers and operators;
- Semantic-syntactic correction of the data by the operators if and when needed;
- Entry of evaluation data aimed at the automatic creation of special general "views";
- Display of the final results reprocessed according to the "views" requested by the final client;

## Claims

1. Electronic data and/or information management and processing system for market research, **characterized in that** it comprises:
• one or more fixed and/or mobile telematic devices to upload and manage said data on at least one remote database where the data is textual and includes single or multiple images;
• at least one remote database suited to place said data in appropriate data structures and organized displays or views;
• means for displaying said data in one or more of said views,
• wherein said data can be processed and structured in multiple different views depending on requirements.

2. System according to claim 1, **characterized in that** it comprises means for the controlled access through a LAN and/or through the internet to said database, for the display of said data.

3. System according to claims 1, 2, **characterized in that** it comprises means for real-time display and processing of said data downloaded from said database.

4. System according to claims 1, 2, **characterized in that** said loading of data comprises the following steps:
• the entry of structured data associated with each interviewee;
• the entry of single images, associated with each interviewee and relative concept;
• the entry of composite images, associated with each interviewee;
and wherein said loaded data respect the rules established in the structuring process of said data.
